# EUROPEAN PATENT APPLICATION

(11) **EP 0 764 912 A2**
(43) Date of publication of application: **26.03.1997**
(21) Application number: 96306653.5
(22) Date of filing: 13.09.1996
(51) Int. Cl.: G06F 17/60

(54) **Electronic price label replacement system and method**

(30) Priority: 21.09.1995 US 531810
(71) Applicant: NCR INTERNATIONAL INC., Dayton, Ohio 45479 (US)
(72) Inventor: Zimmerman, Terry Lee, Lawrenceville, Georgia 30243 (US)
(74) Representative: Robinson, Robert George

(57) **Abstract**

An EPL replacement system and method which automatically determine whether an EPL (22) should be replaced. A data file (32) contains age data related to each EPL (22) or a component thereof, such as a battery (50). A computer (24) reads the data file and determines whether the age of any EPL (22) is greater than a predetermined threshold period, and if so, provides a visual indication on a display (41) or printer (40) that the EPL or a component thereof should be replaced.

## Description

The present invention relates to electronic price label (EPL) systems, and more specifically to an EPL replacement system and method.

EPL systems typically include a plurality of EPLs for each merchandise item in a store. EPLs display the price of corresponding merchandise items on store shelves and are typically attached to a rail along the leading edge of the shelves. A store may contain thousands of EPLs to display the prices of the merchandise items. The EPLs are coupled to a central server from where information about the EPLs is typically maintained in an EPL data file. The EPL data file contains EPL identification information, EPL merchandise item information, and price verifier information, such as, a checksum value or actual data bits. Price information displayed by the EPLs is obtained a price look up file.

EPLs are currently replaced when their batteries fail or when some other component within the EPL fails, such as the liquid crystal display (LCD). Since thousands of EPLs may be installed at one time, an entire price label system within a store could be disabled by failed batteries within a short span of time.

Planned replacement of EPLs is currently a difficult task. A visual inspection of all EPLs within the store is required to determine the date of manufacture of each EPL.

It is an object of the invention to provide an EPL replacement system and method which make information important to an EPL replacement decision, such as date of manufacture, readily available to a store owner without a visual inspection of each EPL within the store.

According to the invention there is provided a method for replacing electronic price labels characterized by the steps of:
(a) providing a data file containing age data related to each of the electronic price labels;
(b) regularly reading the data file by a computer;
(c) determining by the computer whether the age data related to any label is greater than a predetermined threshold period; and
(d) if the age of any label is greater than said threshold period, providing an indication that the label should be replaced.

The invention will now be described by way of example only with reference to the accompanying drawings, in which:
Fig. 1 is a block diagram of an EPL system;
Fig. 2 is a diagram of the information within the EPL data file; and
Fig. 3 is a flow diagram of the EPL replacement method.

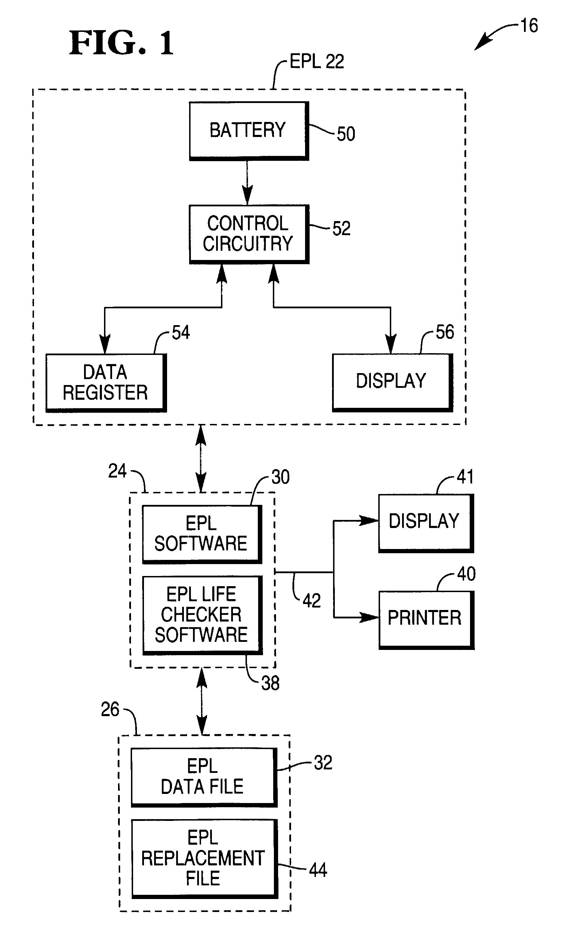

Referring now to Fig. 1, EPL system 16 primarily includes EPL 22, host EPL terminal 24, and EPL storage medium 26. System 16 preferably includes a plurality of EPLs 22.

EPL 22 is typically attached to a shelf within a store and includes battery 50, control circuitry 52, a data register 54, and a display 56. Data register 54 contains data, usually the price of an item associated with an EPL on the shelf. The data is typically displayed by display 56.

Host EPL terminal 24 executes EPL software 30, which maintains the contents of EPL data file 32. Host EPL terminal 24 also regularly or as scheduled executes EPL life checker program 38, which reads the contents of EPL data file 32 and notifies store personnel when an EPL is nearing the end of its life expectancy. EPL life checker program 38 produces EPL replacement file 44 containing a list of EPLs nearing the ends of their useful life. EPL life checker program 38 prints EPL replacement report 42 on printer 40 or displays EPL replacement report 42 on display 41.

EPL storage medium 26 stores EPL data file 32, EPL replacement file 44, and is preferably a fixed disk drive.

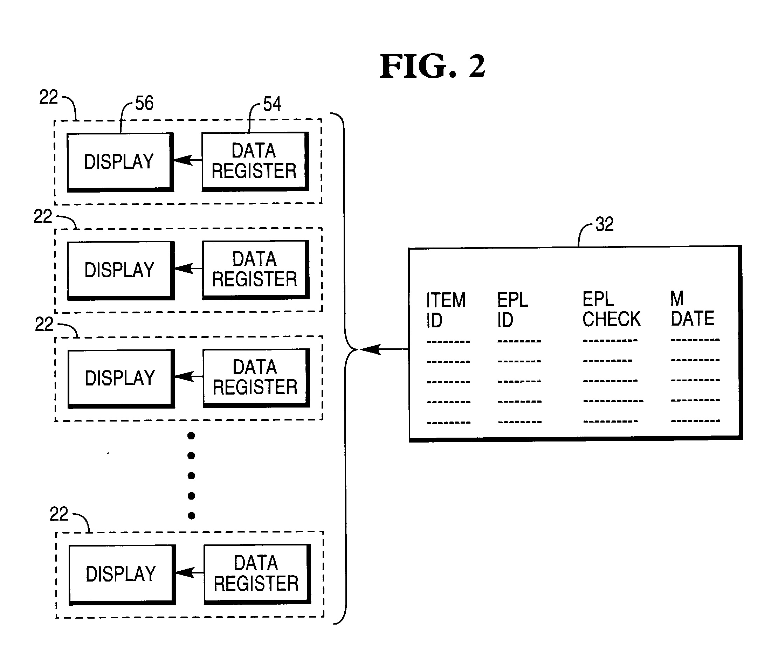

Turning now to Fig. 2, EPL data file 32 is shown in more detail. EPL data file 32 includes a line entry for each EPL 22 in EPL system 16. Each line entry has an item identification entry (ITEM ID), an EPL identification entry (EPL ID), an EPL price checksum value or actual data bits entry (EPL CHECK), and a date of manufacture (M DATE).

Entry ITEM ID identifies a store item. Entry EPL ID identifies a serial number for an EPL which is assigned to the item. Entry EPL CHECK is a checksum value of the digits of the price information that is displayed by display 56.

Entry M DATE identifies the date of manufacture of each EPL. The EPL manufacture may provide EPL data file 32 with the dates of manufacture or the projected age limit of the EPL or a component within the EPL. Alternatively, EPL life checker program 38 may determine the date of manufacture from the serial number of each EPL or use the installation date if older than entered manufacture date. EPL software 30 may then optionally create a new data field for entry M DATE in EPL data file 32.

Other indicia that replacement may be necessary may also be added to EPL data file 32. The time since the date of manufacture of a predetermined component within the electronic price label or since the date of installation of a predetermined component within the electronic price label may determine the time at which an EPL is replaced. For example, battery 50 and display 56 tend to be the most important causes for replacement of an EPL. Therefore, a battery manufacture or installation field, or a display manufacture or installation field may be included and used as a basis for replacing an EPL.

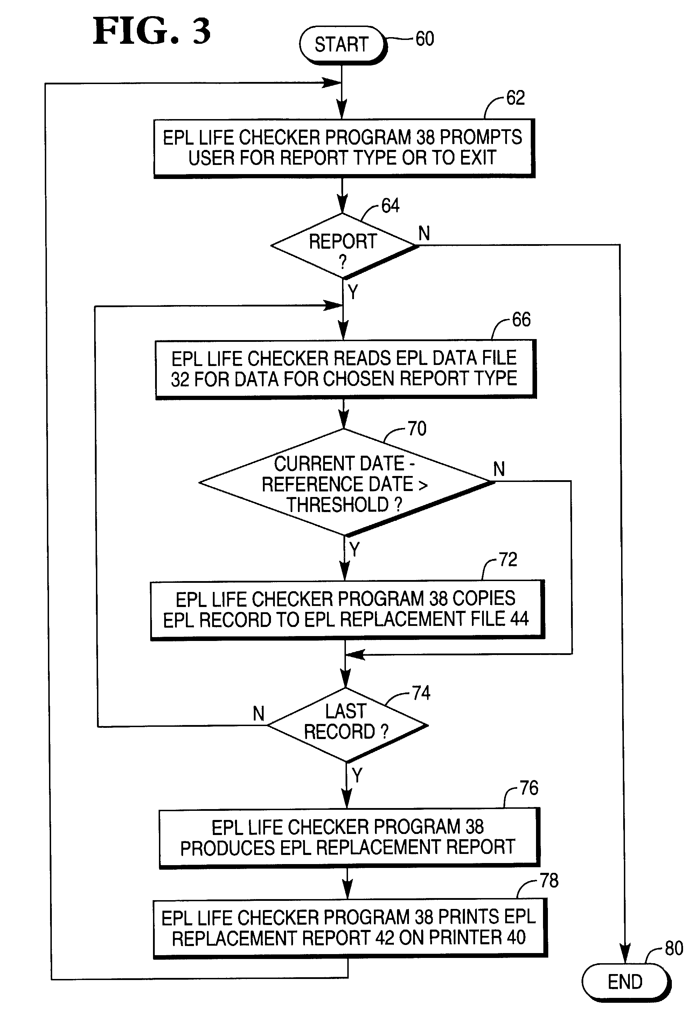

EPL data file 32 may additionally contain an entry for EPL installation date as a backup field to the manufacture date. Installation date may be automatically set to the date an EPL is first added to EPL system 16. The installation date may be used as the comparison date in step 70 below (Fig. 3) if it is older than the manufacture date, indicating that the manufacture date had been incorrectly entered by store personnel.

Turning now to Fig. 3, the operation of EPL life checker program 38 is illustrated in more detail beginning with START 60.

In step 62, EPL life checker program 38 prompts an operator for a report type or to exit.

In step 64, EPL life checker program 38 determines whether the operator has chosen a report type or to exit to step 80.

In step 66, EPL life checker program 38 reads EPL data file 32 for data for one of EPLs 22 to generate the chosen report.

In step 70, EPL life checker program 38 determines whether the current date less the manufacture date is greater than a predetermined advanced warning threshold period for the one EPL. This period is determined by the operator. Here, the manufacture date is used, but the other indicia of EPL age listed above, such as EPL installation date, may be substituted for the manufacture date.

If the EPL is not nearing the end of its projected life, the method proceeds to step 74. If the EPL is nearing the end of its life, EPL life checker program 38 copies the data for that EPL to EPL replacement file 44 in step 72 and proceeds to step 74.

In step 74, EPL life checker program 38 determines whether the record is the last record in EPL data file 32. If not, the method returns to step 66 to determine whether the next EPL is approaching the end of its life.

If the last record has been read, EPL life checker program 38 produces an EPL replacement report 42 in step 76. Any EPLs listed in report 42 are then replaced.

In step 78, EPL life checker program 38 directs printer 40 to print EPL replacement report 42.
Alternatively, report 42 may be displayed on display 41.

The method then returns to step 62, where another report is produced or the program exited.

In step 80, the method ends.

In addition to determining which EPLs need to be replaced by reason of their age or a component age, the system could also be used to determine which EPLs have a known problem (similar to an automobile recall).

## Claims

1. A method for replacing electronic price labels characterized by the steps of:
(a) providing a data file containing age data related to each of a plurality of electronic price labels;
(b) regularly reading the data file by a computer;
(c) determining by the computer whether the age data related to any label is greater than a predetermined threshold period; and
(d) if the age data related to any label is greater than said threshold period, providing a visual indication of that label.

2. The method according to claim 1, characterized in that said age data comprises one of:-
the date of manufacture of the label;
the date of installation of the label;
and in that step (c) comprises the substep of determining by the computer whether said date differs from a current date by more than said predetermined threshold period.

3. A method according to claim 1, characterized in that said age data comprises one of:-
the date of manufacture of a component of the label;
the date of installation of a component of the label;
and in that step (c) comprises the substep of determining by the computer whether said date differs from a current date by more than said predetermined threshold period.

4. The method according to claim 3, characterized in that said component comprises a battery.

5. The method according to claim 2 or claim 3, characterized in that said age data comprises the age limit of the labels or of a predetermined component within the labels.

6. A electronic price label system comprising:
a plurality of electronic price labels (22);
a storage medium (26) having a data file (32) containing age data related to each label; and
a computer (24) which determines from the age data in the data file whether the age data related to any label is greater than a predetermined threshold period; and
display means (40,41) for providing a visual indication of any label having age data greater than said threshold period.
